# FASCICULE DE BREVET EUROPEEN

(11) **EP 1 838 594 B1**
(45) Date de publication et mention de la délivrance du brevet: **18.05.2011**
(21) Numéro de dépôt: 06700394.7
(22) Date de dépôt: 04.01.2006
(51) Int. Cl.: B65D 63/10, B25B 25/00, A01G 17/08

(54) **DISPOSITIF ET PROCEDE DE POSE D'UN ELEMENT ELASTIQUE AUTOUR D'UN ELEMENT NOTAMMENT RECTILIGNE**
VORRICHTUNG UND VERFAHREN ZUM UMSCHLIESSEN EINES ESSENTIELL FESTEN ELEMENTS MIT EINEM ELASTISCHEN ELEMENT
DEVICE AND METHOD FOR PUTTING AN ELASTIC ELEMENT AROUND AN ESSENTIALLY STRAIGHT ELEMENT

(30) Priorité: 18.01.2005 FR 0500510
(43) Date de publication de la demande: 03.10.2007
(73) Titulaire: Ghent-Supply, 9810 Eke-Nazareth (BE)
(72) Inventeur: BOSMANS, Jan, B-9120 Melsele (BE); BOSMANS, Frank, B-9810 Eke (BE)
(74) Mandataire: Hennion, Jean-Claude
(86) Numéro de dépôt international: PCT/EP2006/000027
(87) Numéro de publication internationale: WO 2007/071292

(56) Documents cités:
- FR-A- 2 613 811
- US-A- 5 893 456

## Description

La présente invention a pour objet un dispositif et un procédé de pose, notamment de pose automatique, d'un élément élastique autour d'un élément notamment rectiligne, par exemple autour d'un ensemble constitué d'un sarment de vigne et d'un fil métallique support. L'invention trouve donc en particulier son application dans la fixation de branches telles que des sarments de vigne à un support tel qu'un fil métallique.

Généralement, dans le jardinage comme dans la viticulture, on cherche à guider la croissance d'une plante le long d'un support, par exemple un cordon, un tuteur, une corde, un fil métallique ou autre. Ce support, le long duquel est fixée la plante, peut être rectiligne ou curviligne, horizontal ou vertical, et permet donc d'accompagner la croissance de la plante. Il est donc nécessaire de maintenir la plante attachée à ce support en un ou plusieurs endroits.

La plupart des procédés connus consistent en une ligature ou un serrage de la plante sur son support. Ce type de procédé présente toujours un risque d'endommagement de la plante, ou bien, à l'inverse, de serrage insuffisamment efficace.

On connaît par ailleurs des procédés qui utilisent des éléments élastiques qui présentent l'avantage de réduire les risques d'endommagement de la plante tout en assurant une fixation efficace au support.

On peut notamment utiliser des éléments élastiques de fixation qui comprennent une boucle fermée, une tête et un cou reliant cette tête à la boucle fermée, dans lesquels la tête est prolongée par une excroissance supérieure. Idéalement, la boucle fermée est prolongée par une excroissance inférieure, ce qui facilite la pose de l'élément élastique à la main. En effet, l'étape qui consiste à faire pénétrer la tête proéminente dans la boucle fermée est facilitée par le fait que l'utilisateur peut saisir cette excroissance inférieure au lieu de saisir directement la boucle fermée pour étirer l'élément élastique. De ce fait, la main de l'utilisateur ne gêne pas le passage de la tête dans cette boucle fermée.

L'excroissance inférieure peut être diamétralement opposée à l'excroissance supérieure. Ces éléments élastiques peuvent être en caoutchouc.

Pour faciliter le transport et la pose de ces éléments élastiques en grande quantité et sur des grandes surfaces, ils peuvent être conçus pour faire partie d'un ensemble cohérent, qui comprend au moins deux de ces éléments élastiques de fixation. Ces éléments élastiques sont reliés entre eux par une première liaison au niveau de leurs excroissances supérieures respectives, leurs boucles fermées, leurs têtes et leurs cous respectifs n'étant pas reliés entre eux. Idéalement, ces éléments élastiques sont reliés entre eux par une deuxième liaison au niveau de leurs excroissances inférieures respectives. Ainsi, les éléments élastiques étant reliés entre eux également au niveau de l'excroissance inférieure qui prolonge la boucle fermée, celle-ci n'a plus tendance à flotter puisqu'elle n'est pas laissée libre, si bien que l'accrochage de cette partie inférieure de la boucle fermée à un dispositif de pose, est rendu plus efficace, la prise de ce dispositif dans la boucle fermée étant plus fiable. Par ailleurs, l'arrachage ou désolidarisation d'un élément élastique pour le mettre en place se fait sans risque d'endommagement de la boucle fermée.

Une des première et deuxième liaisons peut être une liaison partielle, obtenue par exemple par une prédécoupe, de façon à faciliter encore plus la séparation ultérieure des éléments élastiques par déchirement au niveau de cette liaison partielle.

Cependant, la pose de ces éléments élastiques est fastidieuse et parfois pénible. Les conditions de pose, en extérieur, sur des surfaces de culture et dans des quantités importantes, notamment dans le cas de la viticulture, sont en effet telles qu'il faut un temps considérable pour poser ce type d'éléments élastiques.

Ces éléments élastiques, s'ils sont suffisamment et durablement résistants, sont également, en contrepartie, difficiles à poser à la main compte tenu de la force non négligeable nécessaire pour les étirer lors de la mise en place, ce qui rend pénible ce geste répétitif de mise en place.

De plus, au cours de la croissance de la plante, il faut parfois, soit déplacer l'élément élastique, soit en ajouter un nouveau, ce qui oblige donc à réitérer régulièrement la mise en oeuvre du procédé de pose de ces éléments élastiques.

Il existe donc un besoin d'un dispositif et d'un procédé de pose d'un élément élastique autour d'un élément notamment rectiligne, par exemple autour d'un ensemble constitué d'un sarment de vigne et d'un fil métallique support, qui permettent de pallier les inconvénients précités. En particulier, il existe un besoin d'un dispositif et d'un procédé qui permettent la pose rapide, simple et automatique d'un grand nombre d'éléments élastiques.

Ainsi, c'est l'objet de la présente invention que de pallier les inconvénients précités en proposant un dispositif et un procédé qui permettent d'amener sans effort, rapidement et facilement l'élément élastique étiré autour de l'élément notamment rectiligne puis d'encercler celui-ci jusqu'à fermeture en relâchant l'étirement sur l'élément élastique.

L'invention se rapporte donc, à un dispositif de pose selon la revendication 1.

Dans une variante de réalisation, les moyens de mise en rotation comprennent une tige longitudinale déplaçable en translation entre une première position arrière de chargement de l'élément élastique et une deuxième position avant de pose de l'élément élastique autour de l'élément notamment rectiligne, des moyens de mise en translation de la tige longitudinale, et des moyens de transformation du mouvement de translation de la tige longitudinale en la rotation des bras supérieurs et inférieurs autour de l'axe de rotation.

De préférence, les moyens de transformation du mouvement de translation de la tige longitudinale en la rotation des bras supérieurs et inférieurs autour de l'axe de rotation, comprennent au moins un élément circulaire denté fixé à l'extrémité avant de la tige longitudinale, libre en rotation autour de l'axe de rotation des bras supérieur et inférieurs, et qui réalise la liaison entre ces bras et la tige longitudinale, et au moins un élément crémaillère dont les dents coopèrent avec les dents de l'élément circulaire denté.

Ainsi, un mouvement de translation de la tige longitudinale génère la rotation de l'élément circulaire denté autour de l'axe de rotation des bras supérieur et inférieurs. Cette rotation génère à son tour la rotation, autour de ce même axe, du bras supérieur dans un sens de rotation et des bras inférieurs dans le sens de rotation inverse de ce sens de rotation.

De préférence, les moyens de mise en translation de la tige longitudinale comprennent une gâchette et/ou un vérin.

Dans une autre variante de réalisation, éventuellement en combinaison avec la précédente, le dispositif comprend des moyens de retour automatique des bras supérieur et inférieurs dans la première position de chargement de l'élément élastique.

De préférence, ces moyens de retour automatique des bras supérieur et inférieurs dans la première position de chargement de l'élément élastique, comprennent au moins un ressort.

De préférence encore, ce ressort s'oppose à la translation de la tige longitudinale de la première position de chargement à la deuxième position de pose de l'élément élastique.

Dans une autre variante de réalisation, éventuellement en combinaison avec l'une quelconque des précédentes, les bras supérieur et inférieurs sont courbés.

Eventuellement, les bras inférieurs sont identiques et parallèles.

De préférence, la distance entre l'extrémité du bras supérieur et l'axe de rotation est inférieure à la distance entre les extrémités respectives des bras inférieurs et cet axe.

De préférence encore, le dispositif comprend un magasin de chargement automatique de l'élément élastique.

L'invention se rapporte également, selon un deuxième aspect, à un procédé de pose d'un élément élastique comprenant une boucle fermée, autour d'un élément notamment rectiligne, mis en oeuvre par le dispositif selon le premier aspect de l'invention.

Dans une variante de mise en oeuvre, le procédé de l'invention comprend une étape d'étirement de l'élément élastique entre une portion supérieure et une portion inférieure de sa boucle fermée, une étape d'encerclement de l'élément notamment rectiligne par l'élément élastique, une étape de fermeture de l'encerclement de l'élément notamment rectiligne par l'élément élastique, par pénétration de la portion supérieure de la boucle fermée de l'élément élastique dans cette boucle fermée au niveau de sa portion inférieure.

Ainsi, le dispositif et le procédé l'invention permettent avantageusement la pose rapide, efficace et répétée, d'un élément élastique autour d'un ensemble de type par exemple sarment de vigne et support métallique.

D'autres caractéristiques et avantages de l'invention apparaîtront plus clairement et de manière complète à la lecture de la description ci-après des variantes préférées de réalisation du dispositif et de mise en oeuvre du procédé, lesquelles sont données à titre d'exemples non limitatifs et en référence aux dessins annexés suivants.
- figure 1a : représente schématiquement un élément élastique à poser avec le dispositif de pose de l'invention,
- figure 1b : représente schématiquement un ensemble cohérent d'éléments élastiques à poser avec le dispositif de pose de l'invention,
- figures 2 à 6 : représentent schématiquement le dispositif de pose d'un élément élastique selon l'invention à différentes étapes du procédé de pose.

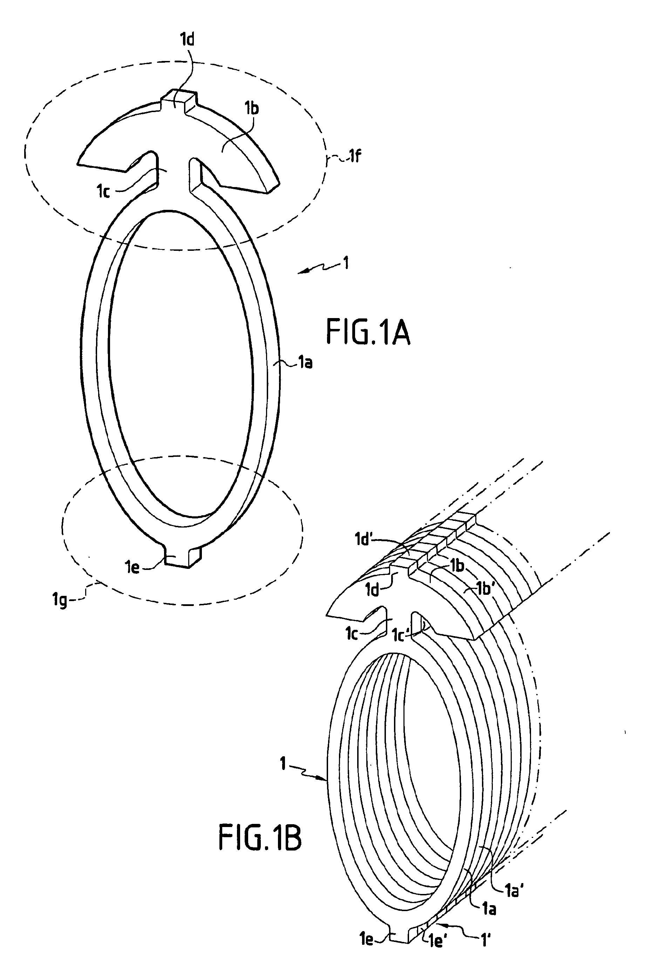

La figure 1a représente schématiquement un exemple d'élément élastique utilisé par le dispositif et dans le procédé de l'invention.

L'élément élastique 1 comprend une boucle fermée 1a, une tête 1b. et un cou 1c reliant la tête 1b à la boucle fermée 1 a. La tête 1b est prolongée par une excroissance supérieure 1d.

La boucle fermée 1a est prolongée par une excroissance inférieure 1e. Celle-ci est de préférence diamétralement opposée à l'excroissance supérieure 1 d.

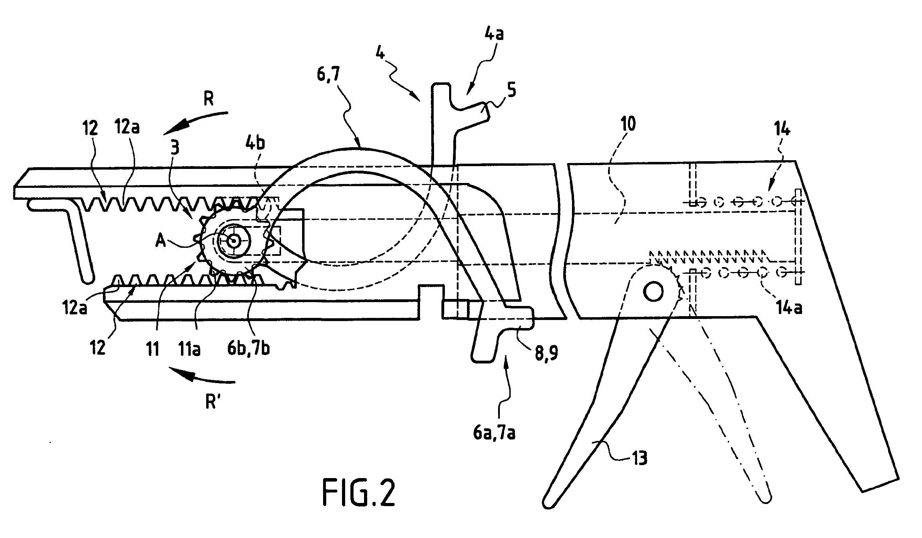

On a également représenté, à la figure 1a, la partie ou portion supérieure de la boucle fermée 1 a, par la référence 1f, et la partie ou portion inférieure de la boucle fermée 1 a, par la référence 1 g, afin d'expliquer le fonctionnement du dispositif et le procédé de pose de l'invention un peu plus loin, en référence aux figures 2 à 6.

L'élément élastique 1 et bien sûr en matériau à propriétés élastiques comme par exemple du caoutchouc.

Cet élément élastique 1 permet donc la fixation notamment d'un serment de vigne sur un fil métallique support, par encerclement de l'élément élastique 1 étiré autour du sarment et du fil métallique. L'encerclement est ensuite fermé en contraignant, par déformation, la tête 1 b à passer dans la boucle fermée 1 a. Après un relâchement de l'élément élastique 1 vers un état non étiré, la tête 1b, qui est proéminente et qui joue le rôle d'ancre, empêche que la fixation de se rouvre puisque les parties latérales proéminentes de cette tête 1b sont bloquées dans la boucle fermée 1 a.

La pose manuelle d'un tel élément élastique de fixation 1 est avantageusement réalisable grâce à la présence de l'excroissance inférieure 1 e. En effet, elle permet à l'utilisateur d'étirer l'élément élastique 1 sans avoir à tirer directement sur la boucle fermée 1a. L'utilisateur ayant saisi l'élément élastique 1 d'une part par l'excroissance supérieure 1d et d'autre part par l'excroissance inférieure 1e, il peut plus facilement étirer l'élément élastique 1 et encercler le sarment de vigne et le fil métallique. Ensuite, puisqu'il n'a pas saisi directement la boucle fermée 1a et qu'il ne gêne donc pas le passage dans celle-ci, il peut plus facilement faire pénétrer, par déformation, la tête 1 b dans cette boucle fermée 1 a.

La figure 1b représente schématiquement un ensemble cohérent d'éléments élastiques tels que celui représenté à la figure 1a.

Cet ensemble cohérent comprend au moins deux éléments élastiques de fixation 1 et 1' conformes à l'élément élastique de fixation 1 de la figure 1a.

Les éléments élastiques 1 et 1' sont reliés entre eux par une première liaison au niveau de leurs excroissances supérieures respectives 1d et 1d'. Par contre, leurs boucles fermées 1a et 1a', leurs têtes 1b et 1b', ainsi que leurs cous 1c et 1c' respectifs ne sont pas reliés entre eux et sont donc désolidarisés l'un ou l'une de l'autre.

Les éléments élastiques 1 et 1' sont reliés entre eux par une deuxième liaison au niveau de leurs excroissances inférieures respectives 1e et 1e'.

De préférence, l'une au moins de ces deux liaisons est une liaison partielle, de façon à faciliter la séparation des éléments élastiques 1 et 1'. Cette liaison partielle peut être obtenue par une prédécoupe, représentée sur la figure 1b par des traits pointillés entre les excroissances supérieures 1d et 1d' et entre les excroissances inférieures 1e et 1e'. Il peut s'agir par exemple d'une découpe latérale complète mais sur une partie seulement de la longueur des excroissances. Il peut s'agir encore d'une découpe longitudinale complète des excroissances mais latéralement incomplète.

Bien sûr, de préférence, l'ensemble cohérent de l'invention comprend un nombre d'éléments élastiques de fixation 1 et 1' supérieur à deux, qui sont alors reliés deux à deux tel qu'expliqué ci-dessus.

Cet ensemble cohérent peut par exemple être obtenu par extrusion dans un matériau élastique comme du caoutchouc. Les éléments élastiques 1 et 1' sont ensuite obtenus par des découpes latérales partielles qui laissent les excroissances supérieures et inférieures liées deux à deux tel qu'expliqué ci-dessus.

Ainsi, l'ensemble cohérent de l'invention permet avantageusement l'utilisation du dispositif de pose de l'invention tel que décrit plus loin en référence aux figures 2 à 6. La présence des excroissances inférieures respectives permet en effet avantageusement la liaison inférieure des éléments élastiques constituant l'ensemble cohérent, nécessaire pour faciliter le chargement sur le dispositif de pose, sans risque d'endommagement de la partie inférieure des boucles fermées au moment de la séparation ou désolidarisation des éléments élastiques.

Les figures 2 à 6 représentent schématiquement le dispositif de pose d'un élément élastique selon invention, à différentes étapes du procédé de pose.

La figure 2 représente schématiquement le dispositif de pose au repos, sans élément élastique chargé.

Le dispositif de pose comprend un bras supérieur 4, éventuellement courbé, et deux bras inférieur 8 et 9 éventuellement courbés, parallèles et identiques, qui sont donc confondus sur cette figure 2.

À l'extrémité 4a du bras supérieur 4 se trouve un ergot 5 qui forme avec cette extrémité 4a un « U » ou un « V », et qui est destiné à accrocher une portion supérieure de la boucle fermée d'un élément élastique. Aux extrémités respectives 6a et 7a des bras inférieurs 6 et 7 se trouvent respectivement les ergots 8 et 9, qui forment donc chacun avec ces extrémités respectives 6a et 7a un « U » ou un « V », et qui sont destinés à accrocher une portion inférieure de la boucle fermée d'un élément élastique.

Ces bras supérieur 4 et inférieurs 6 et 7 sont montés par leurs autres extrémités respectives 4b, 6b et 7b pivotant autour de l'axe A. La rotation de ces bras supérieur 4 et inférieurs 6 et 7 autour de l'axe A est obtenue par des moyens 3 de mise en rotation.

Ces moyens 3 de mise en rotation comprennent par exemple une tige longitudinale 10 qui est déplaçable en translation entre une première position arrière de chargement d'un élément élastique et une deuxième position avant de pose de cet élément élastique autour notamment d'un sarment de vigne et d'un fil métallique support. Le mouvement de translation de cette tige longitudinale 10 est transmis et transformé en la rotation des bras supérieur 4 et inférieurs 6 et 7 autour de l'axe A.

La transformation de ce mouvement de translation de la tige longitudinale 10 en la rotation des bras supérieur 4 et inférieurs 6 et 7 autour de l'axe A, est obtenue par exemple au moyen d'un élément circulaire denté tel qu'une roue dentée 11 dont les dents 11a coopèrent avec les dents 12a d'un élément de type crémaillère 12.

La route dentée 11, fixée à l'extrémité avant de la tige longitudinale 10, est libre en rotation autour de l'axe A et réalise la liaison entre les bras supérieur 4 et inférieurs 6 et 7 d'une part et la tige longitudinale 10 d'autre part.

Le mouvement de translation de la tige longitudinale 10 est déclenché par des moyens 13 de mise en translation tels qu'une gâchette à actionnement manuel ou encore un vérin automatique.

On peut prévoir l'utilisation de moyens 14 de retour automatique des bras supérieur 4 et inférieurs 6 et 7 dans la position initiale de chargement d'un élément élastique. Ces moyens comprennent par exemple un ressort 14a qui s'oppose à la translation de la tige longitudinale 10 de la première position de chargement à la deuxième position de pose d'un élément élastique.

Une gâchette 13 est ainsi représentée à la figure 2. Un mouvement de cette gâchette 13 vers l'arrière, grâce à une pression suffisante sur le ressort 14a, entraîne le déplacement de la tige longitudinale 10 en translation vers l'avant. Un mouvement de cette gâchette 13 vers l'avant, après le relâchement de la pression sur le ressort 14a, entraîne donc le déplacement de la tige longitudinale 10 en translation vers l'arrière.

Ainsi, les moyens 3 de mise en rotation décrits ci-dessus permettent de mettre en rotation, autour de l'axe A, le bras supérieur 4 dans un sens R, et les bras inférieurs 6 et 7 dans le sens R' inverse du sens R.

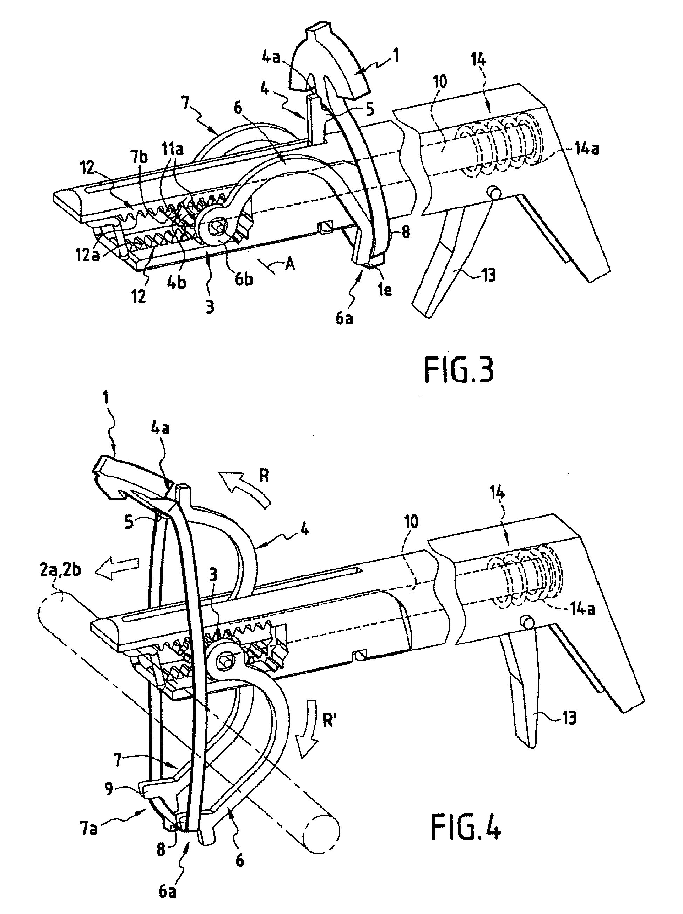

Comme on le verra plus en détail en référence aux figures 3 à 6, dans une première partie de la rotation, l'extrémité 4a du bras supérieur 4 d'une part, et les extrémités respectives 6a et 7a des bras inférieurs 6 et 7 d'autre part, s'écartent les unes de l'autre. Puis, dans une deuxième partie de la rotation, ces extrémités se rapprochent les unes de l'autre, jusqu'à ce que l'extrémité 4a du bras supérieur 4 passe entre les extrémités respectives 6a et 7a des bras inférieurs 6 et 7.

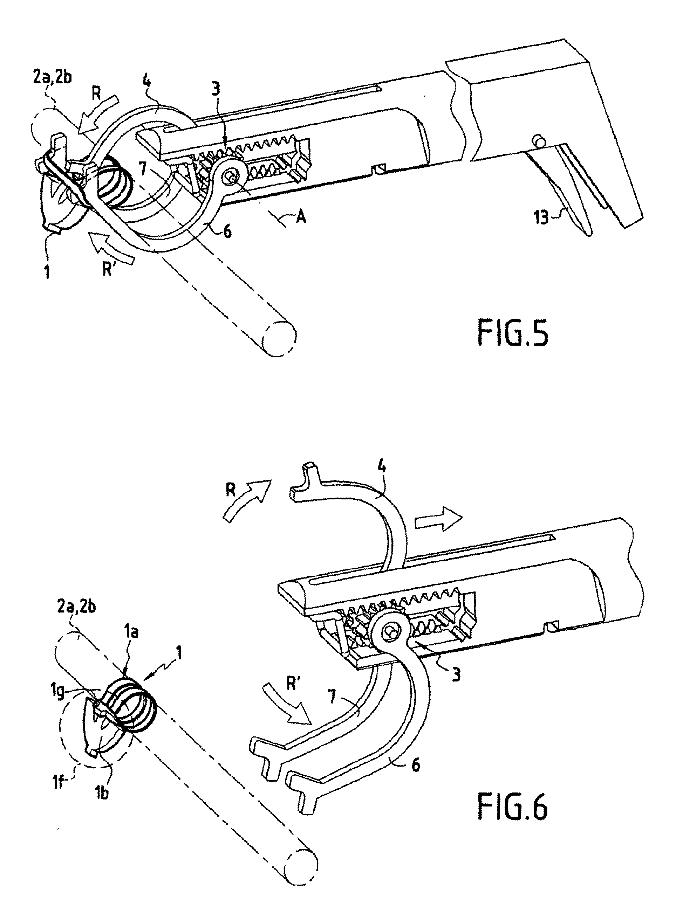

Comme on le verra également, en référence notamment à la figure 5, la distance entre l'extrémité 4a du bras supérieur 4 et l'axe A est de préférence inférieure à la distance entre les extrémités respectives 6a et 7a des bras inférieurs 6 et 7 et cet axe A, afin de permettre plus facilement le passage de la tête de l'élément élastique maintenue par le bras supérieur 4 dans la boucle fermée de l'élément élastique maintenue par les bras inférieurs 6 et 7.

À la figure 3, le dispositif de l'invention est représenté toujours en position de repos, mais avec un élément élastique 1 chargé.

Le chargement est effectué par l'accrochage de la portion supérieure de la boucle fermée de l'élément élastique 1 par l'intermédiaire de l'ergot 5 situé à l'extrémité 4a du bras supérieur 4, et par l'accrochage de la portion inférieure de la boucle fermée de l'élément élastique 1 par l'intermédiaire des ergots respectifs 8 et 9 (ce dernier étant caché) des extrémités 6a et 7a (cette dernière étant cachée) des bras inférieurs 6 et 7.

Eventuellement, le dispositif peut être pourvu d'un magasin de chargement (non représenté) dans lequel un ensemble cohérent d'éléments élastiques, tel que celui représenté à la figure 1b, est disposé, de façon à ce que les bras supérieur 4 et inférieurs 6 et 7 accrochent automatiquement un élément élastique 1 lorsqu'ils sont en position initiale de chargement.

A la figure 4, le dispositif de l'invention est représenté dans une position dans laquelle l'élément élastique 1 est présenté dans un état étiré devant l'ensemble 2a,2b schématisant par exemple un sarment 2a de vigne et un fil métallique support 2b (confondus sur la figure 4 pour simplifier).

Le passage de l'état du dispositif représenté à la figure 3 à l'état du dispositif représenté à la figure 4 est obtenu par la première partie de la rotation du bras supérieur 4 autour de l'axe A dans le sens R, et, simultanément, par la première partie de la rotation des bras inférieurs 6 et 7 autour de l'axe A dans le sens R' inverse du sens R.

C'est bien dans cette première partie de la rotation que l'extrémité 4a du bras supérieur 4 d'une part, et les extrémités respectives 6a et 7a des bras inférieurs 6 et 7 d'autre part, s'éloignent les unes de l'autre, jusqu'à ce que la distance entre eux ces extrémités soit maximale, de sorte d'étirer suffisamment l'élément élastique 1 entre sa portion supérieure et sa portion inférieure, qui est alors présenté devant l'élément 2a,2b a encercler.

Eventuellement, si le chargement se fait à partir d'un ensemble cohérent d'éléments élastiques, tel que celui représenté à la figure 1b, que ce dernier soit disposé ou non dans une magasin de chargement, c'est bien au cours de cette première partie de la rotation que l'élément élastique 1 à poser est séparé de l'ensemble cohérent d'éléments élastiques.

Cette étape constitue donc une première étape du procédé de pose de l'élément élastique 1 de l'invention.

La figure 5 montre le dispositif de l'invention dans la position de pose de l'élément élastique 1 autour de l'ensemble 2a,2b.

Le passage de l'état du dispositif représenté à la figure 4 à l'état du dispositif représenté à la figure 5 est obtenu par la deuxième partie de la rotation du bras supérieur 4 autour de l'axe A dans le sens R, et, simultanément, par la deuxième partie de la rotation des bras inférieurs 6 et 7 autour de l'axe A dans le sens R' inverse du sens R.

C'est bien dans cette deuxième partie de la rotation que l'extrémité 4a du bras supérieur 4 d'une part, et les extrémités respectives 6a et 7a des bras inférieurs 6 et 7 d'autre part, se rapprochent les unes de l'autre, jusqu'à ce que l'extrémité 4a du bras supérieur 4 passe entre les extrémités respectives 6a et 7a des bras inférieurs 6 et 7. Ainsi, l'élément élastique 1 encercle l'ensemble 2a,2b, ce qui constitue une deuxième étape du procédé de pose de l'élément élastique 1 de l'invention.

Puis, la tête de l'élément élastique 1 est contrainte à passer, par déformation, dans sa boucle fermée pour réaliser la fermeture de l'encerclement, ce qui constitue une troisième étape du procédé de pose de l'élément élastique 1 de l'invention.

Compte tenu des propriétés élastiques du matériau utilisé pour l'élément élastique 1, sa tête va bien pénétrer dans la boucle fermée. Eventuellement, pour favoriser ce passage de la tête dans la boucle fermée, la distance entre l'extrémité 4a du bras supérieur 4 et l'axe A peut être inférieure à la distance entre les extrémités respectives 6a et 7a des bras inférieurs 6 et 7 et cet axe A, comme déjà expliqué plus haut.

La figure 6 représente enfin le dispositif de l'invention, après la pose de l'élément élastique 1 autour de l'ensemble 2a,2b, et alors que les bras supérieur 4 et inférieurs 6 et 7 ont commencé leur rotation dans le sens inverse pour décrocher respectivement la portion supérieure 1f et la portion inférieure 1g de l'élément élastique 1, et pour revenir à leur position initiale.

Ce retour à la position initiale est obtenu par relâchement de la gâchette 13 des figures précédentes (non représentée à la figure 6), et favorisé par le ressort 14a des figures précédentes (non représenté à la figure 6).

On voit bien que la forme de la tête 1 b de l'élément élastique 1, qui joue le rôle d'ancre, permet effectivement un ancrage, et donc assure un encerclement durable de l'ensemble 2a,2b, après que les bras supérieur 4 et inférieurs 6 et 7 ont relâché l'élément élastique 1 qui, donc, se resserre.

Ainsi, le dispositif et le procédé de l'invention permettent avantageusement de poser rapidement, simplement et automatiquement un grand nombre d'éléments élastiques de fixation, notamment pour la fixation d'un sarment de vigne sur un fil métallique support. Le dispositif et le procédé de l'invention permettent en effet d'amener sans effort, rapidement et facilement l'élément élastique 1 étiré autour de l'ensemble 2a,2b puis d'encercler celui-ci jusqu'à fermeture fiable et durable en relâchant l'étirement sur l'élément élastique 1.

L'ensemble de la description ci-dessus est donné à titre d'exemple, et est non limitatif de l'invention.

## Revendications

1. Dispositif de pose d'un élément élastique (1) comprenant une boucle fermée (1a), autour d'un élément (2a,2b) notamment rectiligne, ledit dispositif étant **caractérisé en ce qu'**il comprend :
- au moins un bras supérieur (4) pourvu, en une de ses extrémités (4a), d'un moyen (5) d'accrochage apte à permettre l'accrochage d'une portion supérieure (1f) de ladite boucle fermée (1a) dudit élément élastique (1), ledit bras supérieur (4) étant monté, par son autre extrémité (4b), pivotant autour d'un axe (A),
- au moins deux bras inférieurs (6,7) chacun pourvu, en une de ses extrémités (6a,7a), d'un moyen (8,9) d'accrochage apte à permettre l'accrochage d'une portion inférieure (1g) de ladite boucle fermée (1a) dudit élément élastique (1), lesdits bras inférieurs (6,7) étant montés, chacun par son autre extrémité (6b,7b), pivotant autour dudit axe (A),
- des moyens (3) de mise en rotation, autour dudit axe (A), dudit bras supérieur (4) dans un sens de rotation (R) et desdits bras inférieurs (6,7) dans le sens de rotation (R') inverse dudit sens de rotation (R), à partir d'une première position de chargement jusqu'à une deuxième position de pose dudit élément élastique (1),
de sorte que, dans une première partie de ladite rotation, ladite extrémité (4a) dudit bras supérieur (4) d'une part, et lesdites extrémités (6a,7a) desdits bras inférieurs (6,7) d'autre part, s'écartent les unes de l'autre, puis dans une deuxième partie de ladite rotation, se rapprochent les unes de l'autre jusqu'à ce que ladite extrémité (4a) dudit bras supérieur (4) passe entre les extrémités (6a,7a) desdits bras inférieurs (6,7).

2. Dispositif selon la revendication 1, **caractérisé en ce que** lesdits moyens (3) de mise en rotation comprennent :
- une tige longitudinale (10) déplaçable en translation entre une première position arrière de chargement dudit élément élastique (1) et une deuxième position avant de pose dudit élément élastique (1) autour dudit élément (2a,2b) notamment rectiligne,
- des moyens (13) de mise en translation de ladite tige longitudinale (10),
- des moyens (11,12) de transformation du mouvement de translation de ladite tige longitudinale (10) en ladite rotation desdits bras supérieur (4) et inférieurs (6,7) autour dudit axe (A).

3. Dispositif selon la revendication 2, **caractérisé en ce que** lesdits moyens (11,12) de transformation dudit mouvement de translation de ladite tige longitudinale (10) en ladite rotation desdits bras supérieur (4) et inférieurs (6,7) autour dudit axe (A), comprennent :
- au moins un élément circulaire denté (11) fixé à l'extrémité avant de ladite tige longitudinale (10), libre en rotation autour dudit axe (A), et qui réalise la liaison entre lesdits bras supérieur et inférieurs (4,6,7) et ladite tige longitudinale (10),
- au moins un élément crémaillère (12) dont les dents (12a) coopèrent avec les dents (11 a) dudit élément circulaire denté (11),
de sorte qu'un mouvement de translation de ladite tige longitudinale génère la rotation dudit élément circulaire denté (11) autour dudit axe (A), qui génère à son tour ladite rotation, autour de ce dit axe (A), dudit bras supérieur (4) dans ledit sens de rotation (R) et desdits bras inférieurs (6,7) dans ledit sens de rotation (R') inverse dudit sens de rotation (R).

4. Dispositif selon l'une quelconque des revendications 2 et 3, **caractérisé en ce que** lesdits moyens (13) de mise en translation de ladite tige longitudinale (10) comprennent une gâchette et/ou un vérin.

5. Dispositif selon l'une quelconque des revendications 1 à 4, **caractérisé en ce qu'**il comprend des moyens (14) de retour automatique desdits bras supérieur (4) et inférieurs (6,7) dans ladite première position de chargement dudit élément élastique (1).

6. Dispositif selon la revendication 5, **caractérisé en ce que** lesdits moyens (14) de retour automatique desdits bras supérieur (4) et inférieurs (6,7) dans ladite première position de chargement dudit élément élastique (1), comprennent au moins un ressort (14a).

7. Dispositif selon la revendication 6, **caractérisé en ce que** ledit ressort (14a) s'oppose à ladite translation de ladite tige longitudinale (10) de ladite première position de chargement à ladite deuxième position de pose dudit élément élastique (1).

8. Dispositif selon l'une quelconque des revendications 1 à 7, **caractérisé en ce que** lesdits bras supérieur et inférieurs (4,6,7) sont courbés.

9. Dispositif selon l'une quelconque des revendications 1 à 8, **caractérisé en ce que** lesdits bras inférieurs (6,7) sont identiques et parallèles.

10. Dispositif selon l'une quelconque des revendications 1 à 9, **caractérisé en ce que** la distance entre ladite extrémité (4a) dudit bras supérieur (4) et ledit axe (A) est inférieure à la distance entre les extrémités respectives (6a,7a) desdits bras inférieurs (6,7) et ce dit axe (A).

11. Dispositif selon l'une quelconque des revendications 1 à 10, **caractérisé en ce** l'un au moins desdits moyens (5,8,9) d'accrochage d'une portion supérieure ou inférieure (1f,1g) de ladite partie (1a) en boucle fermée dudit élément élastique (1), est un ergot formant un « V » ou un « U » avec l'extrémité (4a,6a,7a) dudit bras inférieur ou supérieur sur laquelle il se trouve.

12. Dispositif selon l'une quelconque des revendications 1 à 11, **caractérisé en ce qu'**il comprend un magasin de chargement automatique dudit élément élastique (1).

13. Procédé de pose d'un élément élastique (1) comprenant une boucle fermée (1a), autour d'un élément (2a,2b) notamment rectiligne, mis en oeuvre par le dispositif selon l'une quelconque des revendications 1 à 12.

14. Procédé selon la revendication 13, **caractérisé en ce qu'**il comprend :
- une étape d'étirement dudit élément élastique (1) entre une portion supérieure (1f) et une portion inférieure (1g) de sa dite boucle fermée (1a),
- une étape d'encerclement dudit élément (2a,2b) par ledit élément élastique (1),
- une étape de fermeture dudit encerclement dudit élément (2a,2b) par ledit élément élastique, par pénétration de ladite portion supérieure (1f) de ladite boucle fermée (1a) dudit élément élastique (1) dans cette dite boucle fermée (1a) au niveau de sa dite portion inférieure (1 g).

## Claims

1. A device for fitting an elastic element (1), including a closed loop (1a), around an element (2a, 2b), in particular a rectilinear element, with the said device being **characterised in that** it includes:
- at least one upper arm (4), equipped at one of its ends (4a) with hooking means (5) suitable for enabling hooking of an upper portion (1f) of the said closed loop (1a) of the said elastic element (1), with the said upper arm (4) being mounted, by its other end (4b), to pivot around an axis (A);
- at least two lower arms (6, 7), each equipped at one of its ends (6a, 7a) with hooking means (8, 9) suitable for enabling hooking of a lower portion (1g) of the said closed loop (1a) of the said elastic element (1), with each of the said lower arms (6, 7) being mounted by its other end (6b, 7b), to pivot around the said axis (A); and
- rotation means (3), around the said axis (A), for rotating the said upper arm (4), in one direction of rotation (R) and the said lower arms (6, 7) in the direction of rotation (R') opposite to the said direction of rotation (R), from a first loading position to a second fitting position of the said elastic element (1),
so that, in a first part of the said rotation, firstly the said end (4a) of the said upper arm (4), and secondly the said ends (6a, 7a) of the said lower arms (6, 7), move away from each other, and then, in a second part of the said rotation, approach each other until the said end (4a) of the said upper arm (4) passes between the ends (6a, 7a) of the said lower arms (6, 7).

2. A device according to claim 1, **characterised in that** the said means (3) for the movement in rotation, include:
- a longitudinal rod (10) that is movable in translation between a first rear loading position of the said elastic element (1) and a second front fitting position of the said elastic element (1) around the said, particularly rectilinear, element (2a, 2b);
- means (13) for the movement in translation of the said longitudinal rod (10); and
- means (11, 12) to convert the translation movement of the said longitudinal rod (10) into the said rotation of the said upper and lower arms (4, 6, 7) around the said axis (A).

3. A device according to claim 2, **characterised in that** the said means (11, 12) for converting the said translation movement of the said longitudinal rod (10) into the said rotation of the said upper and lower arms (4, 6, 7) around the said axis (A), include:
- at least one toothed circular element (11) fixed to the front end of the said longitudinal rod (10), which is free to rotate around the said axis (A), and which creates the link between the said upper and lower arms (4, 6, 7) and the said longitudinal rod (10); and
- at least one rack element (12) whose teeth (12a) mate with the teeth (11a) of the said toothed circular element (11),
so that a translation movement of the said longitudinal rod generates the rotation of the said toothed circular element (11) around the said axis (A), which in turn generates the said rotation, around this said axis (A), of the said upper arm (4) in the said direction of rotation (R), and of the said lower arms (6, 7) in the said direction of rotation (R'), opposite to the said direction of rotation (R).

4. A device according to claim 2 or claim 3, **characterised in that** the said means (13) for the movement in translation of the said longitudinal rod (10) include a trigger and/or an actuator.

5. A device according to any one of claims 1 to 4, **characterised in that** it includes means (14) for the automatic return of the said upper and lower arms (4, 6, 7) to the said first loading position of the said elastic element (1).

6. A device according to claim 5, **characterised in that** the said means (14) for the automatic return of the said upper and lower arms (4, 6, 7) to the said first loading position of the said elastic element (1), include at least one spring (14a).

7. A device according to claim 6, **characterised in that** the said spring (14a) opposes the said translation of the said longitudinal rod (10) of the said first loading position to the said second fitting position of the said elastic element (1).

8. A device according to any one of claims 1 to 7, **characterised in that** the said upper and lower arms (4, 6, 7) are curved.

9. A device according to any one of claims 1 to 8, **characterised in that** the said lower arms (6, 7) are identical and parallel.

10. A device according to any one of claims 1 to 9, **characterised in that** the distance between the said end (4a) of the said upper arm (4) and the said axis (A) is less than the distance between the respective ends (6a, 7a) of the said lower arms (6, 7) and this said axis (A).

11. A device according to any one of claims 1 to 10, **characterised in that** at least one of the said means (5, 8, 9) for hooking an upper or lower portion (If, 1g) of the said part (1a) in a closed loop of the said elastic element (1) is a lug forming a "V" or a "U" with the end (4a, 6a, 7a) of the said lower or upper arm on which it is located.

12. A device according to any one of claims 1 to 11, **characterised in that** it includes a magazine for automatic loading of the said elastic element (1).

13. A method for fitting an elastic element (1) including a closed loop (1a) around an element (2a, 2b), in particular a rectilinear element, implemented by the device according to any one of claims 1 to 12.

14. A method according to claim 13, **characterised in that** it includes:
- a stage for stretching the said elastic element (1) between an upper portion (1f) and a lower portion (1g) of its said closed loop (1a);
- a stage for encircling the said element (2a, 2b) with the said elastic element (1); and
- a stage for closure of the said encircling tie around the said element (2a, 2b) by means of the said elastic element, by inserting the said upper portion (1f) of the said closed loop (1a) of the said elastic element (1) into this said closed loop (1a) at the level of its said lower portion (1g).

## Patentansprüche

1. Vorrichtung zum Anbringen eines eine geschlossene Schlaufe (1a), umfassenden elastischen Elements (1) um ein insbesondere geradliniges Element (2a, 2b), wobei die Vorrichtung **dadurch gekennzeichnet ist, daß** sie umfaßt:
- wenigstens einen oberen Arm (4), der an einem seiner Enden (4a) mit einem Einhakmittel (5) versehen ist, das geeignet ist, das Verhaken eines oberen Abschnitts (1f) der geschlossenen Schlaufe (1a) des elastischen Elements (1) zu ermöglichen, wobei der obere Arm (4) über sein anderes Ende (4b) um eine Achse (A) drehbar angebracht ist,
- wenigstens zwei untere Arme (6, 7), von denen ein jeder an einem seiner Enden (6a, 7a) mit einem Einhakmittel (8, 9) versehen ist, das geeignet ist, das Verhaken eines unteren Abschnitts (1 g) der geschlossenen Schlaufe (1 a) des elastischen Elements (1) zu ermöglichen, wobei die unteren Arme (6, 7) jeweils über ihr anderes Ende (6b, 7b) um die Achse (A) drehbar angebracht sind,
- Mittel (3), um den oberen Arm (4) in eine Drehrichtung (R) und die unteren Arme (6, 7) in die zu der Drehrichtung (R) entgegengesetzte Drehrichtung (R'), von einer ersten Position zum Einlegen bis zu einer zweiten Position zum Anbringen des elastischen Elements (1), um die Achse (A) in Drehung zu versetzen,
so daß in einem ersten Teil der Drehung das Ende (4a) des oberen Arms (4) einerseits und die Enden (6a, 7a) der unteren Arme (6, 7) andererseits sich voneinander entfernen, dann, in einem zweiten Teil der Drehung, sich einander nähern, bis das Ende (4a) des oberen Arms (4) zwischen die Enden (6a, 7a) der unteren Arme (6, 7) gelangt.

2. Vorrichtung nach Anspruch 1, **dadurch gekennzeichnet, daß** die Mittel (3) zum Indrehungversetzen umfassen:
- eine Längsstange (10), die zwischen einer ersten hinteren Position zum Einlegen des elastischen Elements (1) und einer zweiten vorderen Position zum Anbringen des elastischen Elements (1) um das insbesondere geradlinige Element (2a, 2b) verschiebebeweglich ist,
- Mittel (13), um die Längsstange (10) in Verschiebebewegung zu versetzen,
- Mittel (11,12) zum Umwandeln der Verschiebebewegung der Längsstange (10) in die Drehung des oberen Arms (4) und der unteren Arme (6, 7) um die Achse (A).

3. Vorrichtung nach Anspruch 2, **dadurch gekennzeichnet, daß** die Mittel (11, 12) zum Umwandeln der Verschiebebewegung der Längsstange (10) in die Drehung des oberen Arms (4) und der unteren Arme (6, 7) um die Achse (A) umfassen:
- wenigstens ein kreisförmiges Zahnelement (11), das drehfrei um die Achse (A) an dem vorderen Ende der Längsstange (10) befestigt ist und das die Verbindung zwischen dem oberen und den unteren Armen (4, 6, 7) und der Längsstange (10) herstellt,
- wenigstens ein Zahnstangenelement (12), dessen Zähne (12a) mit den Zähnen (11a) des kreisförmigen Zahnelements (11) zusammenwirken,
so daß eine Verschiebebewegung der Längsstange die Drehung des kreisförmigen Zahnelements (11) um die Achse (A) erzeugt, die ihrerseits die Drehung des oberen Arms (4) in die Drehrichtung (R) und der unteren Arme (6, 7) in die zu der Drehrichtung (R) entgegengesetzte Drehrichtung (R') um diese Achse (A) bewirkt.

4. Vorrichtung nach einem der Ansprüche 2 und 3, **dadurch gekennzeichnet, daß** die Mittel (13), um die Längsstange (10) in Verschiebebewegung zu versetzen, einen Abzug und/oder einen Zylinder umfassen.

5. Vorrichtung nach einem der Ansprüche 1 bis 4, **dadurch gekennzeichnet, daß** sie Mittel (14) zum automatischen Rückführen des oberen Arms (4) und der unteren Arme (6, 7) in die erste Position zum Einlegen des elastischen Elements (1) umfaßt.

6. Vorrichtung nach Anspruch 5, **dadurch gekennzeichnet, daß** die Mittel (14) zum automatischen Rückführen des oberen Arms (4) und der unteren Arme (6, 7) in die erste Position zum Einlegen des elastischen Elements (1) wenigstens eine Feder (14a) umfassen.

7. Vorrichtung nach Anspruch 6, **dadurch gekennzeichnet, daß** die Feder (14a) sich dem Verschieben der Längsstange (10) von der ersten Position zum Einlegen in die zweite Position zum Anbringen des elastischen Elements (1) entgegensetzt.

8. Vorrichtung nach einem der Ansprüche 1 bis 7, **dadurch gekennzeichnet, daß** der obere und die unteren Arme (4, 6, 7) gekrümmt sind.

9. Vorrichtung nach einem der Ansprüche 1 bis 8, **dadurch gekennzeichnet, daß** die unteren Arme (6, 7) identisch sind und parallel verlaufen.

10. Vorrichtung nach einem der Ansprüche 1 bis 9, **dadurch gekennzeichnet, daß** der Abstand zwischen dem Ende (4a) des oberen Arms (4) und der Achse (A) kleiner ist als der Abstand zwischen den jeweiligen Enden (6a, 7a) der unteren Arme (6, 7) und dieser Achse (A).

11. Vorrichtung nach einem der Ansprüche 1 bis 10, **dadurch gekennzeichnet, daß** wenigstens eines der Mittel (5, 8, 9) zum Verhaken eines oberen oder unteren Abschnitts (1f, 1g) des als geschlossene Schlaufe ausgebildeten Teils (1a) des elastischen Elements (1) ein Zapfen ist, der mit dem Ende (4a, 6a, 7a) des unteren oder oberen Arms, an dem er sich befindet, ein "V" oder ein "U" bildet.

12. Vorrichtung nach einem der Ansprüche 1 bis 11, **dadurch gekennzeichnet, daß** sie ein Magazin zum automatischen Einlegen des elastischen Elements (1) umfaßt.

13. Verfahren zum Anbringen eines eine geschlossene Schlaufe (1 a) umfassenden elastischen Elements (1) um ein insbesondere geradliniges Element (2a, 2b), welches mittels der Vorrichtung nach einem der Ansprüche 1 bis 12 durchgeführt wird.

14. Verfahren nach Anspruch 13, **dadurch gekennzeichnet, daß** es umfaßt:
- einen Schritt zum Strecken des elastischen Elements (1) zwischen einem oberen Abschnitt (1f) und einem unteren Abschnitt (1 g) seiner geschlossenen Schlaufe (1a),
- einen Schritt zum Umgreifen des Elements (2a, 2b) durch das elastische Element (1),
- einen Schritt zum Schließen des Umgreifens des Elements (2a, 2b) durch das elastische Element **dadurch**, daß der obere Abschnitt (1f) der geschlossenen Schlaufe (1a) des elastischen Elements (1) in diese geschlossene Schlaufe (1 a) im Bereich ihres unteren Abschnitts (1g) eindringt.
